# EUROPEAN PATENT APPLICATION

(11) **EP 0 773 114 A2**
(43) Date of publication of application: **14.05.1997**
(21) Application number: 96117767.2
(22) Date of filing: 06.11.1996
(51) Int. Cl.: B60B 7/00, B60B 7/06

(54) **Rust-preventing cover mounting structure**

(30) Priority: 07.11.1995 JP 288601/95
(71) Applicant: TOYOTA JIDOSHA KABUSHIKI KAISHA, Aichi-ken (JP)
(72) Inventor: Nitta, Makoto, Toyota-shi, Aichi (JP); Ito, Takahiro, Kariya-shi, Aichi-ken (JP)
(74) Representative: KUHNEN, WACKER & PARTNER

(57) **Abstract**

A rust-preventing cover mounting structure is provided in which ease of mounting and removing a rust-preventing cover is improved without an increase in a number of parts thereof. Anchor portions (24), which are separably anchored to hub nuts (18) due to elastic deformation of the anchor portions, are provided integrally with the rust-preventing cover (20) at positions thereof corresponding to the hub nuts (18). Therefore, operations for inserting and removing fastening members, which are separate parts, are unnecessary, and time and labor involved in mounting and removing the rust-preventing cover can be saved. Accordingly, the ease of mounting and removing the rust-preventing cover (20) to a wheel (14) can be improved. Further, because the anchor portions (24) are formed integrally with the rust-preventing cover (20), a number of parts does not increase, and a manufacturing cost can be kept down.

## Description

### BACKGROUND OF THE INVENTION

### Field of the Invention

The present invention relates to a rust-preventing cover mounting structure for mounting a rust-preventing cover, which covers the outer side surface of a disc portion of a wheel, to the disc portion.

### Description of the Related Art

From the time that assembly of an automobile has been completed to the time that the automobile is delivered to a dealer or to the purchaser, there are cases in which the automobile is exposed outdoors for a long period of time while the automobile is being stored or the like. When steel wheels are used, due to rainwater or the like, the wheels may rust, or the disc rotor or other parts of the disc brake device disposed within the automobile may rust. Therefore, conventionally, a rust-preventing cover which is a separate part has been mounted to the wheel in order to prevent the wheel and other parts from rusting. An example of a structure of such a rust-preventing cover is disclosed in Japanese Utility Model Application Laid-Open (JP-U) No. 2-138237. This structure will be described in brief hereinafter.

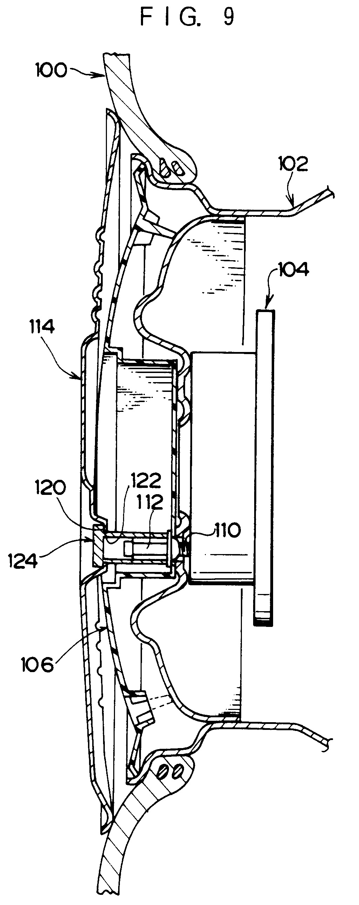

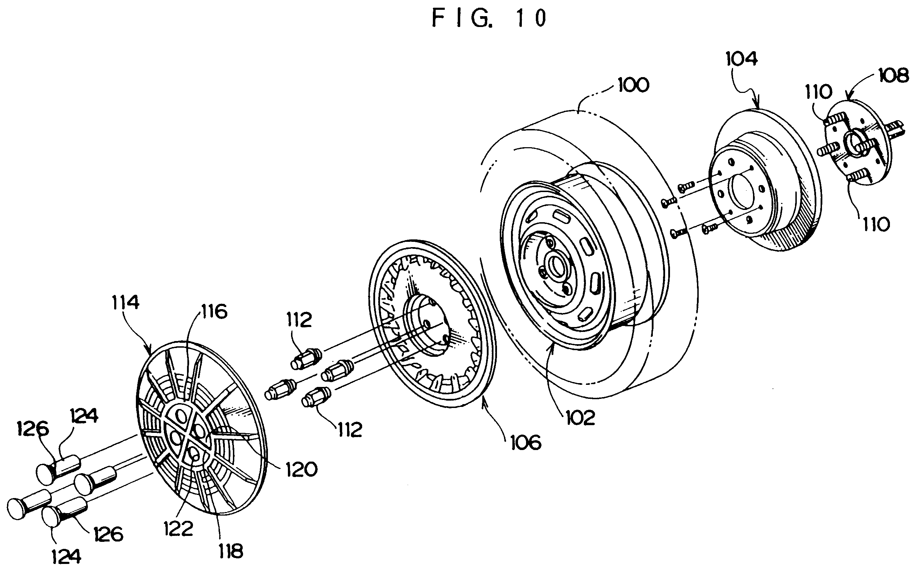

As illustrated in Figs. 9 and 10, a wheel 102 is disposed at the axially central portion of a tire 100. A disc rotor 104 of a disc brake device is disposed at the inboard side of the wheel 102. A wheel cap 106 is disposed at the outboard side of the wheel 102. The disc rotor 104, the wheel 102 and the wheel cap 106 are fastened together by hub nuts 112 and hub bolts 110 which project from an axle hub 108 disposed at the inboard side of the disc rotor 104.

A circular-plate-shaped rust-preventing cover 114 is mounted to the outboard side of the wheel cap 106. The rust-preventing cover 114 is formed of a thin, rigid synthetic resin such as a rigid vinyl chloride resin or the like. An annular rib 116 and a cross-shaped rib 118 are formed in the central portion of the rust-preventing cover 114. A circular through hole 122 is formed in each of fan-shaped concave portions 120 demarcated by the ribs 116, 118.

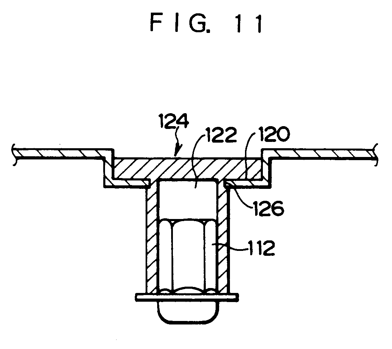

The rust-preventing cover 114 having the above-described structure is mounted to the wheel cap 106 as summarized hereinafter. First, the through holes 122 of the rust-preventing cover 114 and the hub nuts 112 are positioned coaxially, and the rust-preventing cover 114 is positioned with respect to the wheel cap 106. Next, cylindrical anchor members 124 are inserted into the through holes 122 of the rust-preventing cover 114. As illustrated in Fig. 11, a groove 126 is formed in the outer peripheral surface of the head portion side of the anchor member 124. When the anchor member 124 is inserted into the through hole 122, the peripheral edge portion of the through hole 122 at the concave portion 120 of the rust-preventing cover 114 fits into the groove 126 so that the groove 126 functions as a stopper.

However, when the above structure is employed, the rust-preventing cover 114 is mounted to the wheel cap 106 by using the plurality of anchor members 124 which are respectively separate parts. Therefore, a drawback arises in that the number of parts increases, which leads to an increase in cost.

Further, when the rust-preventing cover 114 is being mounted, the plurality of anchor members 124 must be respectively inserted into the corresponding through hole 122. When the rust-preventing cover 114 is to be removed, the plurality of anchor members 124 must respectively be removed from the corresponding through hole 122. Further, due to the configuration of the anchor member 124, it is difficult for a worker to grasp the head portion of the anchor member 124 between his/her fingers. For these reasons, a drawback arises in that much time and labor are involved in mounting and removing the rust-preventing cover 114.

### SUMMARY OF THE INVENTION

In view of the aforementioned, an object of the present invention is to provide a rust-preventing cover mounting structure which can be easily mounted and removed without an increase in the number of parts.

A first aspect of the present invention is a rust-preventing cover mounting structure for mounting, to a disc portion of a wheel, a rust-preventing cover which covers an outer side surface of the disc portion, characterized in that an anchor means is provided integrally at predetermined positions of the rust-preventing cover which positions correspond to fastening members which are disposed in a projecting state at the disc portion of the wheel and which fasten the wheel to an axle hub, the anchor means being separably anchored to the fastening members.

In a second aspect of the present invention, in the first aspect, an engaging means, which separably engages the wheel, is provided integrally with the rust-preventing cover.

In accordance with the first aspect of the invention, when the rust-preventing cover is to be mounted to the outer side surface of the disc portion of the wheel, it suffices that the anchor means provided integrally with the rust-preventing cover is positioned coaxially with respect to the fastening members, and that thereafter, the anchor means is anchored to the fastening members. Further, when the rust-preventing cover is to be removed from the outer side surface of the disc portion of the wheel, it suffices to cancel the anchored state of the anchor means and the fastening members. Accordingly, at times of mounting and removing the rust-preventing cover to and from the wheel, operations, which were necessary in the conventional art, for inserting or removing fastening members, which are separate parts, are not needed. Accordingly, labor and time involved in the mounting and removal of the rust-preventing cover can be saved.

Because the anchor means is provided integrally with the rust-preventing cover, the number of parts does not increase.

In accordance with the second aspect of the present invention, the engaging means which separably engages the wheel is provided integrally with the rust-preventing cover. Therefore, after the anchor means is anchored to the fastening members, by engaging the engaging means with the wheel, rattling of the rust-preventing cover caused by wind or the like can be prevented. As a result, the mounted state of the rust-preventing cover can be made stable.

### BRIEF DESCRIPTION OF THE DRAWINGS

Fig. 1 is a cross-sectional view taken along line 1-1 of Fig. 2 and illustrating a mounted state in which a rust-preventing cover relating to a first embodiment is mounted to a wheel.

Fig. 2 is a front view of the mounted state of the rust-preventing cover illustrated in Fig. 1.

Fig. 3 is an enlarged front view of an anchor portion provided at the rust-preventing cover illustrated in Fig. 1.

Fig. 4 is a longitudinal sectional view of the anchor portion illustrated in Fig. 3.

Fig. 5 is an enlarged sectional view of an engaging portion provided at the rust-preventing cover illustrated in Fig. 1.

Fig. 6 is a cross-sectional view taken along line 6-6 of Fig. 7 and illustrating a mounted state in which a rust-preventing cover relating to a second embodiment is mounted to a wheel.

Fig. 7 is a front view of the mounted state of the rust-preventing cover illustrated in Fig. 6.

Fig. 8 is an enlarged sectional view of an engaging portion provided at the rust-preventing cover illustrated in Fig. 6.

Fig. 9 is a longitudinal sectional view illustrating a mounted state in which a rust-preventing cover relating to a conventional example is mounted to a wheel.

Fig. 10 is an exploded perspective view illustrating a state in which the rust-preventing cover and other parts illustrated in Fig. 9 are separated from the wheel.

Fig. 11 is a cross-sectional view of main portions illustrating an anchor member used in the mounting of the rust-preventing cover illustrated in Fig. 9.

### DESCRIPTION OF THE PREFERRED EMBODIMENTS

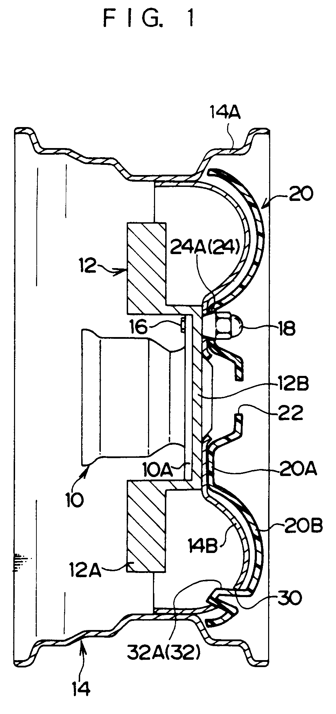

A first embodiment of the present invention will be described hereinafter with reference to Figs. 1 through 5.

As illustrated in Fig. 1, a disc rotor 12 which is a main element of a disc brake device is disposed coaxially at the outboard side of a flange portion 10A of an axle hub 10. The disc rotor 12 is substantially disc-shaped, and includes a flange portion 12A, against which a pair of brake pads disposed within an unillustrated caliper are pressed, and a boss portion 12B, which is formed as a cylinder having a bottom and which is disposed at the axially central portion of the flange portion 12A.

A steel wheel 14 is disposed at the outboard side of the disc rotor 12. The wheel 14 is substantially cylindrical, and includes a rim portion 14A, on which an unillustrated tire is mounted and which supports the tire, and a disc portion 14B, which is disposed at the axially central portion of the rim portion 14B.

The boss portion 12B of the disc rotor 12 and the disc portion 14B of the wheel 14 are positioned so as to abut the flange portion 10A of the axle hub 10. In this state, hub nuts 18 are screwed with hub bolts 16 projecting from the flange portion 10A of the axle hub 10, so that the wheel 14 and the disc rotor 12 are fastened to the axle hub 10. In the present embodiment, the hub bolts 16 and the hub nuts 18 fix not only the wheel 14 but also the disc rotor 12 to the axle hub 10. However, the present invention is not limited to this structure, and there may be cases in which the disc rotor 12 is formed integrally with the axle hub 10 or the disc rotor 12 is press-fit into the axle hub 10.

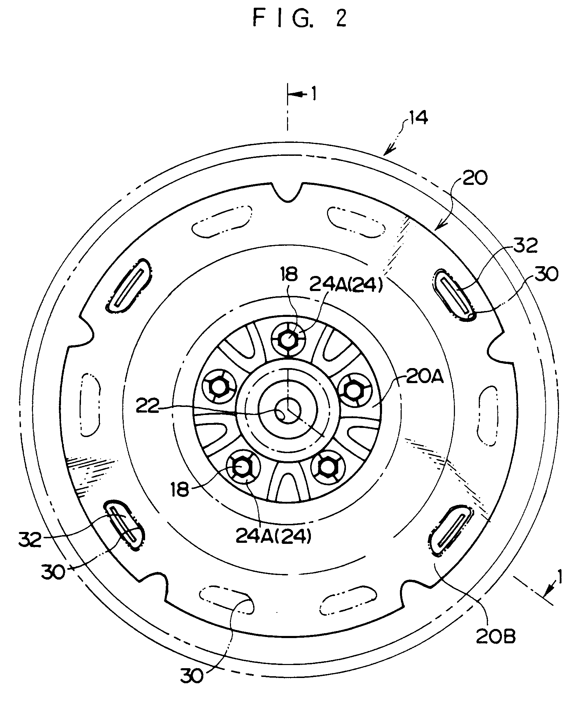

A rust-preventing cover 20 formed of a fiber-mold material is mounted to the outboard side of the disc portion 14B of the wheel 14. The fiber-mold material is manufactured by utilizing waste paper. As illustrated in Fig. 2, the rust-preventing cover 20 is substantially circular-plate-shaped as viewed from the front thereof, and includes a concave portion 20A, which is disposed at the axially central portion of the rust-preventing cover 20, and a curved portion 20B, which extends in a curved configuration from the outer peripheral portion of the concave portion 20A toward the radial direction outer side. The axially central portion of the concave portion 20A protrudes toward the outboard side, and a through hole 22 is formed therein.

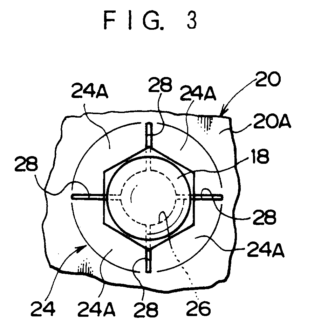

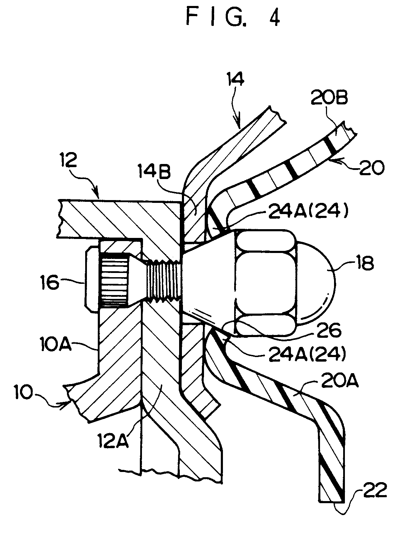

A plurality of anchor portions 24 are formed at predetermined intervals integrally with the outer peripheral portion of the concave portion 20A. The anchor portions 24 are set at positions which are coaxial with respect to the set positions of the hub nuts 18. As illustrated in Figs. 3 and 4, the anchor portion 24 is structured such that a through hole 26, whose diameter is smaller than the outer diameter of the hub nut 18, is formed at a predetermined region of the concave portion 20A (a region coaxial with the hub nut 18), and such that four slits 28, which at 90 degree intervals divide the peripheral edge portion of the through hole 26 into four regions, are formed continuously with the through hole 26. In this way, four anchor pieces 24A formed at the peripheral edge portion of the through hole 26 are elastically deformable. As illustrated in Fig. 4, it is preferable that the inner end of each anchor piece 24A is chamfered at an angle of inclination which matches the taper surface of the hub nut 18.

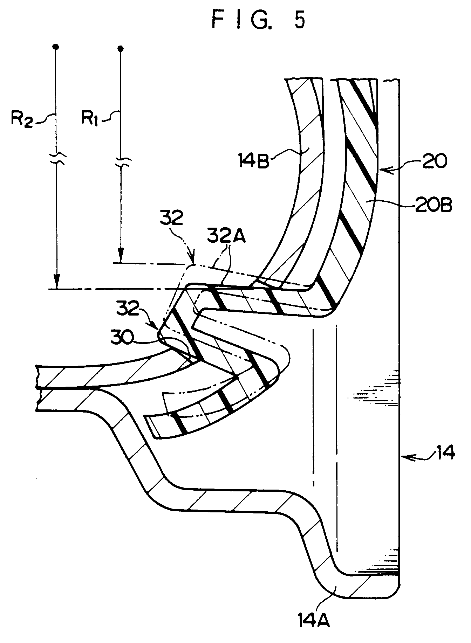

As shown in Figs. 1 and 2, four engaging portions 32, which engage with openings 30 formed in the disc portion 14B of the wheel 14, are formed integrally at predetermined intervals at the radial direction outer side of the set positions of the anchor portions 24 (anchoring means) of the rust-preventing cover 20, i.e., at the outer peripheral portion of the curved portion 20B of the rust-preventing cover 20. The openings 30 formed in the disc portion 14B are peep-hole-shaped openings which have already been formed in the disc portion 14B. As illustrated in the enlarged view of Fig. 5, the engaging portions 32 are formed as projections which, in their natural state (the state illustrated by the two-dot chain line in Fig. 5), project from the curved portion 20B toward the disc portion 14B of the wheel 14, such that the cross-sectional configuration of the engaging portion 32 is substantially trapezoidal. The radius of curvature R₁ of the distal end side of a taper surface 32A of the engaging portion 32 in the natural state is set to be smaller than the radius of curvature R₂ of the inner peripheral edge of the opening 30 of the wheel. Accordingly, when the anchor portions 24 of the rust-preventing cover 20 are anchored to the hub nuts 18, the taper surfaces 32A of the engaging portions 32 interfere with the inner peripheral edges of the openings 30 of the wheel 14.

Next, operation of the present embodiment will be explained.

When the rust-preventing cover 20 is to be installed at the outer side surface of the disc portion 14B of the wheel 14, first, the rust-preventing cover 20 is positioned in the peripheral direction with respect to the wheel 14. More specifically, the anchor portions 24 of the rust-preventing cover 20 and the hub nuts 18 projecting from the disc portion 14B of the wheel 14 are positioned coaxially. Next, while this state is maintained, the rust-preventing cover 20 is pushed against the disc portion 14B of the wheel 14. In this way, the hub nuts 18 are fit relatively into the through holes 26 of the anchor portions 24 of the rust-preventing cover 20. At this time, because the anchor pieces 24A forming the anchor portions 24 elastically deform, the fitting of the hub nuts 18 into the through holes 26 is permitted. When the hub nuts 18 are completely fit in the through holes 26, the distal end portions of the anchor pieces 24A abut and are anchored to the taper surfaces of the hub nuts 18.

Next, the engaging portions 32 provided at the rust-preventing cover 20 are engaged with the openings 30 formed in the disc portion 14B of the wheel 14. More specifically, at the point in time that the anchor portions 24 are anchored to the hub nuts 18, the taper surfaces 32A of the engaging portions 32 in their natural states interfere with the inner peripheral edges of the openings 30, because the radius of curvature R₁ of the distal end side of the taper surface 32A of the engaging portion 32 is set to be smaller than the radius of curvature R₂ of the inner peripheral edge of the opening 30 of the wheel 14. Namely, the engaging portions 32 are not yet engaged with the openings 30. From this state, by pushing the engaging portions 32 into the openings 30, the inner peripheral edges of the openings 30 slide relatively on the taper surfaces 32A of the engaging portions 32, and the engaging portions 32 elastically deform toward the radial direction outer side. In this way, the engaging portions 32 are completely engaged with the inner peripheral edges of the openings 30 due to the elastic restoring force of the engaging portions 32.

When the rust-preventing cover 20 is to be removed from the disc portion 14B of the wheel 14, a worker may hook his/her finger(s) into the through hole 22 formed in the axially central portion of the rust-preventing cover 20, and pull off the rust-preventing cover 20 in the direction of separating the rust-preventing cover 20 from the disc portion 14B of the wheel 14. In this way, the engaging portions 32 are separated from the openings 30 while elastically deforming toward the radial direction outer side, and the anchor portions 24 are separated from the hub nuts 18 while elastically deforming toward the centers of the through holes 26.

As can be understood from the above description of the mounting and removing operations, in the present embodiment, the anchor portions 24, which are separably anchored to the hub nuts 18 by elastically deforming, are provided integrally at positions of the rust-preventing cover 20 corresponding to the hub nuts 18. Therefore, the operations of the conventional art for inserting and removing engaging members which are separate parts are not needed, and time and labor involved in such mounting and removal can be saved. As a result, the ease of mounting and removing the rust-preventing cover 20 to and from the wheel 14 can be improved.

In the first embodiment, because the anchor portions 24 are formed integrally with the rust-preventing cover 20, the number of parts does not increase, and the manufacturing cost of the rust-preventing cover 20 can be kept down.

Further, in the present first embodiment, in addition to the anchor portions 24, the engaging portions 32 are provided further toward the radial direction outer side than the set positions of the anchor portions 24, and the rust-preventing cover 20 and the disc portion 14B of the wheel 14 are removably engaged. Therefore, rattling of the rust-preventing cover 20 due to wind or the like can be prevented. As a result, the mounted state of the rust-preventing cover 20 can be made stable, and the rust-preventing cover 20 can be effectively prevented from coming off of the wheel 14.

Because the rust-preventing cover 20 of the present first embodiment is formed by a fiber-mold material, when the rust-preventing cover 20 deteriorates or the like, it can be recycled as waste paper.

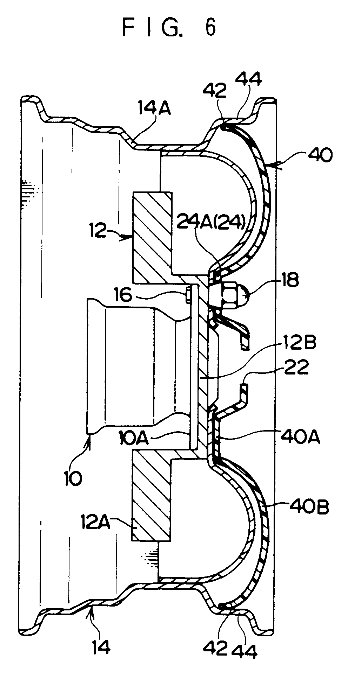

A second embodiment of the present invention will be described hereinafter with reference to Figs. 6 through 8. Structural portions which are the same as those of the first embodiment are denoted by the same reference numerals, and description thereof is omitted.

As shown in Figs. 6 through 8, a rust-preventing cover 40 relating to the present second embodiment is similar to the rust-preventing cover 20 of the first embodiment in that the anchor portions 24 are provided at a concave portion 40A disposed at an axially central portion of the rust-preventing cover 40. However, in the rust-preventing cover 40, the structure of an engaging portion 42 differs from the structure of the previously-described engaging portion 32. This point will be discussed in further detail hereinafter.

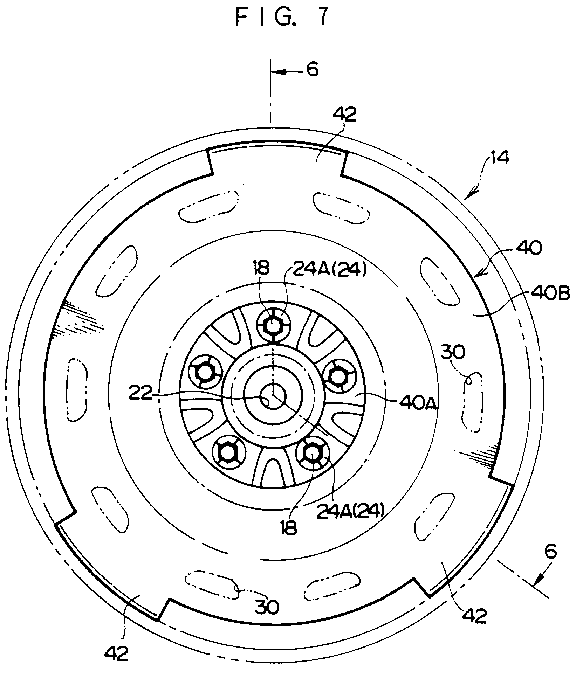

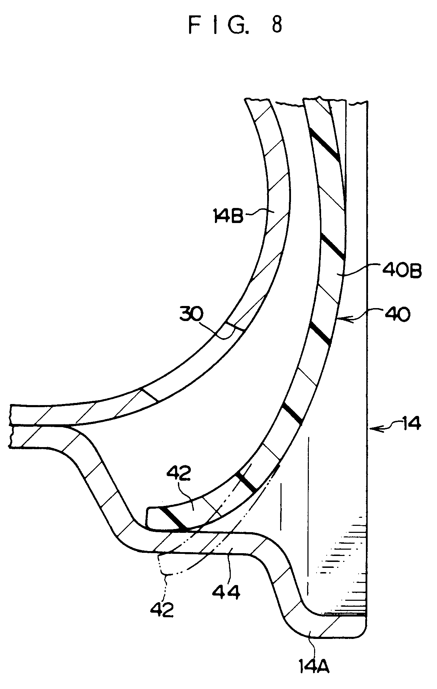

As illustrated in Fig. 7, a plurality of the projection-shaped engaging portions 42 are formed at predetermined intervals integrally with the outer peripheral edge of a curved portion 40B of the rust-preventing cover 40. The engaging portion 42 is substantially rectangular as viewed from the front thereof. In the natural state of the engaging portion 42 (the state illustrated by the two-dot chain line in Fig. 8), the radial direction dimension of the outer peripheral edge of the engaging portion 42 is set to be slightly greater than the inner diameter dimension of a circumferential direction wall portion 44 of the rim portion 14A of the wheel 14.

In accordance with the above-described structure, after the anchor portions 24 of the rust-preventing cover 40 are anchored to the hub nuts 18 projecting from the disc portion 14B of the wheel 14, the engaging portions 42 are elastically deformed from the state illustrated by the two-dot chain line in Fig. 8 to the state illustrated by the solid line in Fig. 8, so as to engage the inner peripheral surface of the peripheral direction wall portion 44 of the rim portion 14A of the wheel 14. In this way, the rust-preventing cover 40 is securely mounted to the wheel 14 due to the elastic restoring force of the engaging portions 42. Accordingly, in the present second embodiment as well, the rust-preventing cover 40 does not rattle due to wind or the like, and the rust-preventing cover 40 can effectively be prevented from coming off of the wheel 14.

In the above-described embodiments, the engaging portions 32, 42 are set at a vicinity of the outer peripheral edge or at the outer peripheral edge of the curved portions 20B, 40B of the rust-preventing covers 20,40. However, it suffices that the engaging portions 32, 42 are set further toward the radial direction outer side than the set positions of the anchor portions 24.

The structures of the anchor portions 24 and the engaging portions 32, 42 are not limited to the above-described structures. For the anchor means, any structure suffices provided that it is provided integrally with the rust-preventing cover and can be removably anchored to a fastening member. For the engaging means, any structure suffices provided that it is provided integrally with the rust-preventing cover and can be removably engaged with the wheel.

In the above-described embodiments, the anchor portions 24 of the rust-preventing covers 20, 40 are anchored to the hub nuts 18. (The method of fastening in this case is called a hub nut fastening method.) However, the present invention is not limited to the same. A method in which the wheel 14 and the disc rotor 12 are fastened to the axle hub 10 by the hub bolts being inserted from the outer side of the wheel 14 and screwed with the axle hub 10 may also be applied to the present invention. (The method of fastening in this case is called a hub bolt fastening method.) In this case, the anchor portions 24 are anchored to the head portions of the hub bolts.

In the rust-preventing cover mounting structure relating to the first aspect of the present invention, an anchor means, which is separably anchored to fastening members, is provided integrally at predetermined positions of the rust-preventing cover which positions correspond to the fastening members which are disposed in a projecting state at a disc portion of a wheel and which fasten the wheel to an axle hub. Therefore, superior effects are achieved in that there is no increase in the number of parts, and the ease of mounting and removing the rust-preventing cover improves.

In the rust-preventing cover mounting structure relating to the second aspect of the present invention, in the invention of the first aspect, an engaging means which separably engages the wheel, is provided integrally with the rust-preventing cover. Therefore, a superior effect is achieved in that the rust-preventing cover can be effectively prevented from coming off of the wheel.

## Claims

1. A rust-preventing cover mounting structure for mounting, to a disc portion of a wheel, a rust-preventing cover which covers an outer side surface of the disc portion, characterized in that:
an anchor means is provided integrally at predetermined positions of said rust-preventing cover which positions correspond to fastening members which are disposed in a projecting state at the disc portion of the wheel and which fasten the wheel to an axle hub, said anchor means being separably anchored to the fastening members.

2. A rust-preventing cover mounting structure according to claim 1, characterized in that an engaging means, which separably engages the wheel, is provided integrally with said rust-preventing cover.

3. A rust-preventing cover mounting structure according to claim 1 or 2, characterized in that said anchor means includes a plurality of anchor portions which are each formed by a through hole, whose diameter is smaller than an outer diameter of the fastening member, and four slits, which at 90 degree intervals divide a peripheral edge portion of the through hole into four regions and which are continuous with the through hole, such that four elastically deformable anchor pieces are formed at the peripheral edge portion of the through hole.

4. A rust-preventing cover mounting structure according to claim 3, characterized in that an inner end of the anchor piece is chamfered to an angle of inclination which matches a taper surface of the fastening member.

5. A rust-preventing cover mounting structure according to any of claims 1 through 4, characterized in that the fastening member includes a hub bolt which projects from the axle hub and a hub nut which screws with the hub bolt.

6. A rust-preventing cover mounting structure according to claim 2, characterized in that said engaging means includes engaging portions which engage with openings formed in the disc portion of the wheel, the engaging portions being formed as projections which, in a natural state, project toward the disc portion of the wheel.

7. A rust-preventing cover mounting structure according to claim 6, characterized in that a radius of curvature of a distal end of a taper surface of the engaging portion in a natural state is set to be smaller than a radius of curvature of an inner peripheral edge of the opening of the wheel.

8. A rust-preventing cover mounting structure according to claim 2, characterized in that said engaging means includes a plurality of projection-shaped, substantially rectangular engaging portions which are formed at predetermined intervals integrally with an outer peripheral edge of said rust-preventing cover, a radial direction dimension of an outer peripheral edge of the engaging portion in a natural state being set to be slightly greater than an inner diameter dimension of a peripheral direction wall portion of the wheel.

9. A rust-preventing cover mounting structure according to claim 2, characterized in that said rust-preventing cover is formed from a concave portion, which is disposed at an axially central portion of said rust-preventing cover, and a curved portion, which extends in a curved shape from an outer peripheral portion of the concave portion toward a radial direction outer side, and an axially central portion of the concave portion protrudes toward an outboard side, and a through hole is formed in the axially central portion of the concave portion, and said anchor means includes anchor portions which are formed at predetermined regions of the concave portion, and said engaging means is formed at the curved portion.

10. A rust-preventing cover according to any of claims 1 through 9, characterized in that said rust-preventing cover is formed from a fiber-mold material.
